Europäisches Patentamt

European Patent Office

Office européen des brevets

(11) Publication number: **0 065 014**
A1

# EUROPEAN PATENT APPLICATION

published in accordance with Art. 158(3) EPC

(21) Application number: **81903080.0**

(22) Date of filing: **20.11.81**

Data of the international application taken as a basis:

(86) International application number: **PCT/JP 81/00348**

(87) International publication number: **WO 82/01850 (10.06.82 82/15)**

(51) Int. Cl.³: **B 31 B 1/16**, B 26 D 11/00, B 26 D 1/40

(30) Priority: **23.11.80 JP 165025/80**

(43) Date of publication of application: **24.11.82**
**Bulletin 82/47**

(84) Designated Contracting States: **DE FR GB**

(71) Applicant: **ISOWA INDUSTRY CO. LTD., 18 Hohtokucho Kita-ku Nagoya-shi, Aichi 462 (JP)**

(72) Inventor: **IMA, Eiji Isowa Industry Co., Ltd., Kasugai Factory, 66 Nishiyacho, Kasugai-shi Aischi 486 (JP)**

(74) Representative: **Schmidt, Horst, Dr. et al, Patentanwälte Pohlmann & Schmidt Siegfriedstrasse 8, D-8000 München 40 (DE)**

(54) **CONTINUOUS CORRUGATED FIBERBOARD SHEET SPECIFICATION ALTERING APPARATUS.**

(57) An apparatus which alters the specifications of a corrugated fiberboard sheet produced from the double facer of a corrugating machine. A rotary shear cutter (1) is disposed downstream of slitter scoring units (2a, 2b) for scoring the corrugated fiberboard sheet. Since the corrugated fiberboard sheet is cut at the downstream side of the slitter scoring units (2a, 2b) when the specifications of the corrugated fiberboard sheet are altered, the end of the sheet thus cut is not engaged with the inlet of the slitter scoring units. It is not necessary to decelerate the operating speed of the corrugating machine even when altering the specifications of the corrugated fiberboard sheet.

0065014

Apparatus for Instantly Changing

Specifications of Corrugated Paperboard

Field of the Invention:

The present invention relates to an apparatus capable of instantly changing specifications or specified dimensions of corrugated paperboard without reducing an operational speed of the double-face corrugater in cutting and scoring corrugated paperboard coming out of the double-face corrugater.

Background of the Invention:

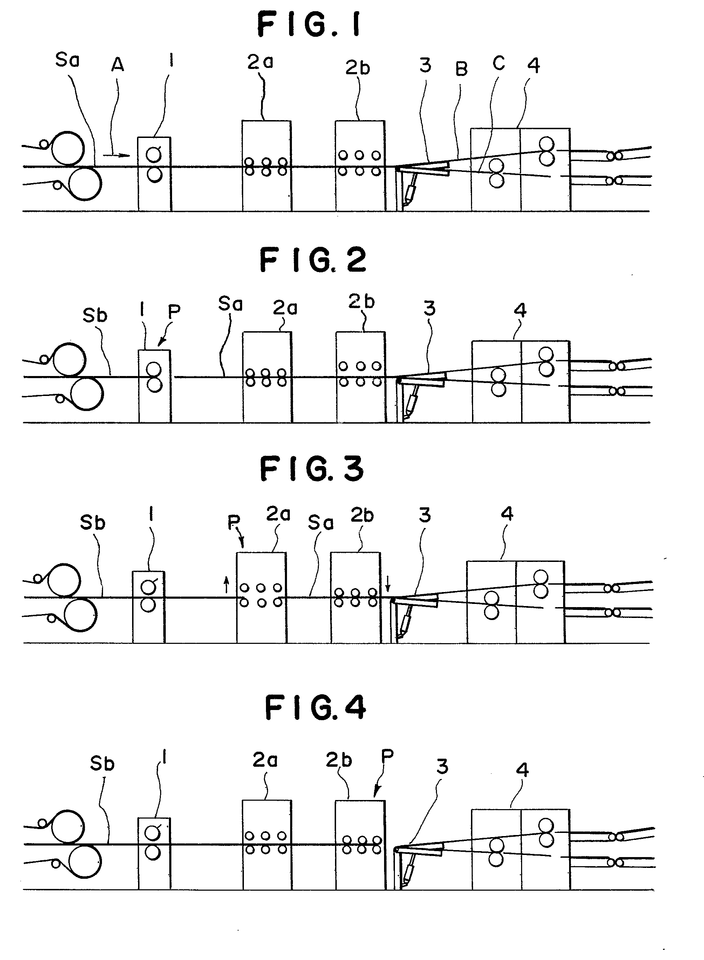

A conventional apparatus and procedures which have been employed for changing specified dimensions of cutting/scoring by the slitter-scorer and of cutting by the double-cutter of corrugated paperboard coming out of the double-face corrugater, are described hereunder with reference to drawings. In Fig. 1, a rotary shear 1 cuts off corrugated paperboard perpendicularly to its advancing direction (hereinafter to be called "longitudinal cutting"). There are at least two slitter-scorers 2a, 2b so arranged as to perform cutting and scoring of the corrugated paperboard in parallel with its advancing direction (hereinafter to be called "cross cutting"). One of the slitter-scorers performs slitting and scoring operation while the other is ready for changed dimensions of the next specifications. Guide means 3 serve to guide the cross-out corrugate paperboards to separate them to the upper and the lower stream. A double-cutter 4 serves to cut longitudinally

- 1 -

the corrugated paperboards in the upper and lower streams respectively. In the above-mentioned structure, corrugated paperboard Sa advances to the right as shown by the arrow A, passing a rotary shear 1 intact, being cut and scored by the slitter-scorer 2a, and passing the slitter-scorer 2b. The cross-cut corrugated paperboards are guided by the guide means 3 to be separated to the upper stream B and the lower stream C, and are fed to the double-cutter 4 which cut them in a specified cross length so as to be transported to a stacker by a conveyer. Explanation is made on an instance where corrugated paperboard Sb to be changed to new specifications has been advancing in the course of the above-mentioned operation. As shown in Fig. 2, when a point P reaches the rotary shear 1 in making a specification change, the rotary shear 1 longitudinally cuts the paperboard at such a point P. When the corrugated paperboard Sb further advances and the point P reaches the slitter-scorer 2b as shown in Fig. 3, the upper rollers of the slitter-scorer 2a set for the dimensions of the former specifications are moved upwardly relative the lower rollers as indicated by the arrow to form gaps between the upper and lower rollers so that the corrugated paperboard Sb passes intact. On the other hand, upon arrival of the point P, the upper rollers of the slitter-scorer 2b standing ready for newly specified dimensions are moved downwardly toward the lower rollers as shown by the arrow to start cutting and scoring according to the newly specified dimensions and as shown in Fig. 4, the point P passes through the slitter-scorer 2b. Then, upon arrival of the point P at the double-cutter 4, the double-cutter 4 momentarily changes its cutting length to the newly specified one, terminating the specification-changing operation. Subsequently, corrugated paperboards according to the newly specified dimensions are produced and transported to the stacker by the conveyor.

With the arrangement of the conventional apparatus as described above, however, in changing specifications, the corrugated paperboard Sb is cut off at the point P by the rotary shear 1 upstream the slitter-scorers. Therefore, when the front egde of the cut-off paperboard advances at a normal operational speed, for example, at a high speed of 100 m/min., the fact is that the corrugated paperboard Sb can hardly reach the slitter-scorer 2b smoothly due to such mishaps as a collision of the front end against the guide means, etc. before reaching the slitter-scorer 2b, passing the slitter-scorer 2a intact. Such being the case, usually an advancing speed of corrugated paperboard is reduced. However, such reduction in speed of advancing corrugated paperboard decreases the productivity by a lower operational speed of the corrugater, and prolonged time of stay of the corrugated paperboard in the double-face corrugater causes warps or other defects in the corrugated paperboard.

Disclosure of the Invention:

An object of the present invention is to remove the above-mentioned disadvantages so that specifications can be changed at a normal operational speed. In order to achieve such an object, the present invention provides an apparatus for instantly changing specifications of corrugated paperboard, wherein at least one slitter-scorer, a rotary shear and a double-cutter are arranged in order to advance of corrugated paperboard coming out of the double-face corrugater, and in changing specifications the rotary shear is adapted to cut the paperboard upon arrival of a point of specification change at the rotary shear subsequently to cutting/scoring operation by the slitter-scorer.

Furthermore, the present invention provides an apparatus for instantly changing specifications of corrugated paperboard, wherein two slitter-scorers, a rotary shear and a double-cutter are arranged in order to advance of corrugated paperboard coming out of the double-face corrugater, and in changing specifications the rotary shear is adapted to cut the paperboard upon arrival of a point of specification change at the rotary shear subsequently to cutting/scoring operation by one of the slitter-scorers.

In a preferred embodiment of the present invention, the apparatus for instantly changing specifications of corrugated paperboard is characterized in that a trim shear, slitter-scorers, a rotary shear and a double-cutter are arranged in order to advance of corrugated paperboard coming out the double-face corrugater; after the trim shear cuts off edges of the paperboard on its sides upon arrival of a point of the corrugated paperboard to be changed in specifications at the trim shear, one or the other of the slitter-scorers performs cutting/scoring operation according to the new specifications, and then, the corrugated paperboard is cut at the point of specification change by the rotary shear upon its arrival at the rotary shear.

Brief Description of the Drawings:

.Fig. 1 through Fig. 4 show the conventional apparatus. Fig. 1 is a side view showing a condition before a change of specifications. Fig. 2 is a side view showing a condition that corrugated paperboard of new specifications has reached the rotary shear. Fig. 3 is a side view showing a condition that the corrugated paperboard of the new specifications has reached the slitter-scorer. Fig. 4 is a side view showing a condition that the corrugated paperboard of new specifications has passed through the slitter-scorer;

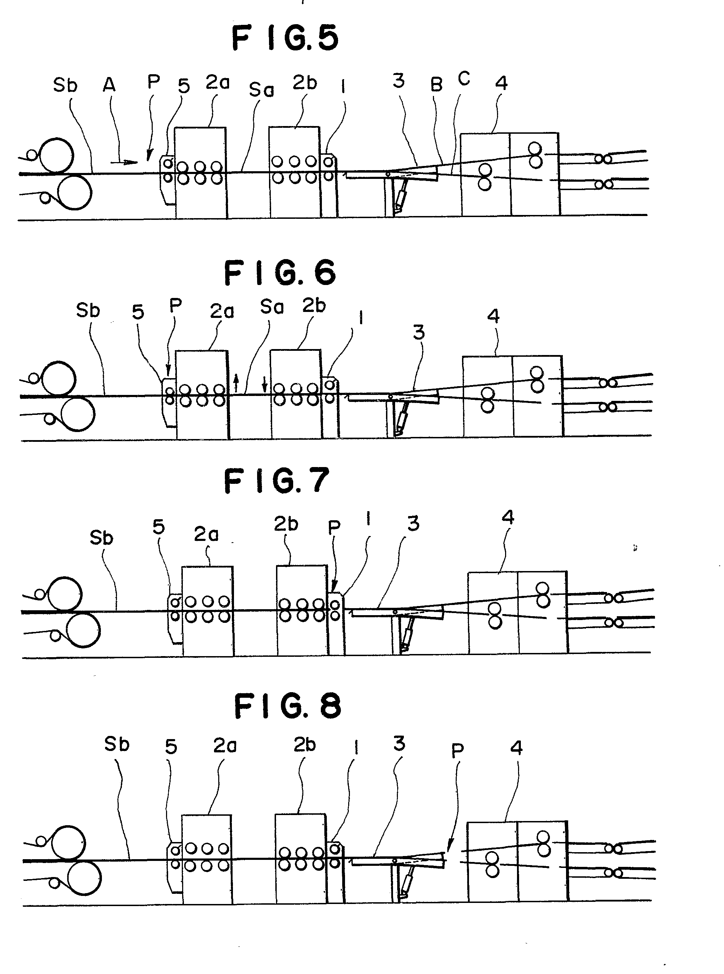

Fig. 5 through Fig. 8 show an embodiment of the present invention. Fig. 5 is a side view showing a condition before a change of specifications. Fig. 6 is a side view showing a condition that a point of specification change has reached the trim shear. Fig. 7 is a side view showing a condition that the point of specification change has reached the rotary shear. Fig. 8 is a side view showing a condition that the change of specifications has completed.

The Most Preferred Embodiment of the Invention:

The present invention is further described by way of an embodiment with reference to the accompanying drawings. In Fig. 1 through Fig. 4, the similar or corresponding parts are indicated by the similar symbol. In Fig. 5, a trim shear trims edges corrugated paperboard on its sides at need. Corrugated paperboard Sa advances from the left to the right in the direction of the arrow A. According to the present invention, the apparatus has, from the left in order to advance of the corrugated paperboard, at least two slitter-scorers 2a, 2b, a rotary shear 1, a guide means 3 and a double-cutter 4 arranged in that order. Differently from the conventional apparatus, the trim shear 5 is provided upstream the slitter-scorers 2a, 2b and the rotary shear 1 is provided downstream them. Each equipment being arranged as mentioned above, in normal operation the corrugated paperboard passes the trim shear 5 intact and is cut and scored by the slitter-scorer 2a but passes intact the slitter-scorer 2b standing ready for dimensions changed to the next specifications and the rotary shear 1. The cross-cut paperboards Sa is guided by a guide means 3 to be separated to the upper stream B and the lower stream C, and then supplied to the double-cutter 4 which cuts them in a specified cross length so that they are transported to a stacker by a conveyor. Now, explanation will be made on an instance where corrugated paperboard to be changed to new specifications has been advancing during the operation as mentioned above. Upon arrival of the point of specification change P shown in Fig. 5 at the trim shear 5 as shown in Fig. 6, the trim shear 5 cuts off the edges. Simultaneously, each of the upper rollers of the slitter-scorer 2a moves upwardly and upon arrival of the specification change point P, the upper rollers of the slitter-scorer 2b standing ready for dimensions of new specifications, with each of move downwardly as indicated by the arrow to start cutting and scoring according to the dimensions of the new specifications. As narrow edge strips come off from both sides of the paperboard at the slitter-scorer, suction means is equipped to dispose of such strips of corrugated paperboard. Since corrugated paperboards to be finished in differently specified dimensions and having varied widths are fed to the slitter-scorer without being longitudinally cut, trimming of their edges at the point of specification change by the trim shear is an indispensable process. The corrugated paperboard processed by the slitter-scorer 2b is, upon arrival of the point P of specification change at the rotary shear 1 as illustrated by Fig. 7, cut by the rotary shear 1. Then, as shown in Fig. 8, the point P of specification change guided by the guide means 3 reaches the double-cutter 4, which changes its cutting length momentarily to the one according to the new specifications, terminating the specification change operation. Subsequently, corrugated paperboards in the newly specified dimensions are produced and are transported to the stacker by the conveyor.

For the next change of specifications, the slitter-scorer 2a is standing ready for the new dimensions of the next specification and according to the above-mentioned process, the slitter-scorer 2a operates, the slitter-scorer 2b standing-by.

In the above-mentioned embodiment, the explanation was made on an instance where both the preceding and new specifications require different cutting and scoring processes, necessitating two slitter-scorers. However, when either one of the preceding and new specifications requires a cutting/scoring process but the other does not require it, only one slitter-scorer suffices the need.

As described above, the apparatus for continuously changing specifications of corrugated paperboard according to the present invention does not cut off the point of specification change initially but cuts off it after processing by the slitter-scorer. Therefore, the apparatus can avoid collision of the front edge against the guide means, which happens frequently in the conventional apparatus, enabling changes to new specifications at a normal operational speed. Accordingly, in addition to an increase of productivity of the corrugater, the apparatus has an advantage of preventing warps since a length of stay of corrugated paperboard in the double-face corrugater remains unchanged when specifications are being changed.

CLAIMS:

1.      An apparatus for instantly changing specifications of corrugated paperboard, wherein at least one slitter-scorer, a rotary shear and a dougle-cutter are arranged in order to advance of corrugated paperboard coming out of the double-face corrugater, and in changing specifications said rotary shear is adapted to cut the paperboard upon arrival of a point of specification change at the rotary shear subsequently to cutting/scoring operation by the slitter-scorer.

2.      An apparatus for instantly changing specifications of corrugated paperboard, wherein two slitter-scorers, a rotary shear and a double-cutter are arranged in order to advance of corrugated paperboard coming out of the double-face corrugater, and in changing specifications said rotary shear is adapted to cut the paperboard upon arrival of a point of specification change at the rotary shear subsequently to cutting/scoring operation by one of the slitter-scorers.

3.      An apparatus for instantly changing specifications of corrugated paperboard, characterized in that a trim shear, slitter-scorers, a rotary shear and a double-cutter are arranged in order of advance of corrugated paperboard coming out of the double-face corrugater, after said trim shear cuts off edges of the paperboard upon arrival of a point of the corrugated paperboard to be changed in specifications at the trim shear, one or the other of the slitter-scorers performs cutting/scoring operation according to the new specifications, and then the corrugated paperboard is cut at its point of specification change by said rotary shear upon its arrival at the rotary shear.

1/2

FIG. 1

FIG. 2

FIG. 3

FIG. 4

0065014

# FIG.5

# FIG.6

# FIG.7

# FIG.8

# INTERNATIONAL SEARCH REPORT

International Application No. PCT/JP81/00348

## I. CLASSIFICATION OF SUBJECT MATTER (if several classification symbols apply, indicate all)

According to International Patent Classification (IPC) or to both National Classification and IPC

Int. Cl.$^3$ B31B 1/16, B26D 11/00, B26D 1/40

## II. FIELDS SEARCHED

| Minimum Documentation Searched 4 | |
|---|---|
| Classification System | Classification Symbols |
| I P C | B31B 1/00, B26D 1/00, B26D 11/00 |

| Documentation Searched other than Minimum Documentation to the Extent that such Documents are Included in the Fields Searched 5 | |
|---|---|
| Jitsuyo Shinan Koho | 1945 - 1981 |
| Kokai Jitsuyo Shinan Koho | 1971 - 1981 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| P | JP,A, 56-86737 (Mitsubishi Heavy Industries, Ltd.) 14, July, 1981 (14.07.81), Column 5, line 12 to column 6, line 9 | 3 |
| A | US,A, 3,882,765, (Rengo Co., Ltd.) 13, May, 1975 (13.05.75), Column 1, line 64 to column 2, line 6 | 1,2,3 |

"A" document defining the general state of the art which is not considered to be of particular relevance

"P" document published prior to the international filing date but later than the priority date claimed

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search 2 | Date of Mailing of this International Search Report 2 |
|---|---|
| February 15, 1982 (15.02.82) | February 22, 1982 (22.02.82) |
| International Searching Authority 1 | Signature of Authorized Officer 20 |
| Japanese Patent Office | |

Form PCT/ISA/210 (second sheet) (October 1977)